(19) Europäisches Patentamt
European Patent Office
Office européen des brevets

(11) Veröffentlichungsnummer: **0 173 927**
**A2**

(12) # EUROPÄISCHE PATENTANMELDUNG

(21) Anmeldenummer: 85110625.2

(22) Anmeldetag: 23.08.85

(51) Int. Cl.⁴: **C 09 B 67/14**

(30) Priorität: 03.09.84 DE 3432319

(43) Veröffentlichungstag der Anmeldung: 12.03.86 Patentblatt 86/11

(84) Benannte Vertragsstaaten: CH DE FR GB IT LI

(71) Anmelder: HOECHST AKTIENGESELLSCHAFT
Postfach 80 03 20
D-6230 Frankfurt am Main 80(DE)

(72) Erfinder: Spietschka, Ernst, Dr.
Kirchweg 3
D-6270 Idstein/Taunus(DE)

(72) Erfinder: Urban, Manfred
Steigerwaldstrasse 2a
D-6200 Wiesbaden(DE)

(54) **Verfahren zur Herstellung organischer Pigmente mit hervorragenden anwendungstechnischen Eigenschaften.**

(57) Verfahren zur Herstellung organischer Pigmente mit hervorragenden anwendungstechnischen Eigenschaften, dadurch gekennzeichnet, daß man feinverteilte Rohpigmente der Anthanthron-, Pyranthron-, Isoviolanthron-, Azo-, Chinacridon-, Flavanthron-, Indanthron-, Naphthaldazin-, Indigo-, Thioindig-, Tetracarboximid-, Dioxazin-, Isoindolinon-, Perylen-, Anthrapyrimidin-, Acylanthrachinon-, Dianthrachinonyl-, Azoanthrachinon-, Azomethinanthrachinon- und Phthalocyanin-Reihe mit sauren Estern aus Polyphosphorsäure und einem primären, sekundären oder tertiären Alkanol von 1 bis 8 Kohlenstoffatomen, einem Glykol, Glykolethor oder Phenol bei Temperaturen von 0°C bis 100°C, behandelt, anschließend den angewandten Polyphosphorsäureester hydrolysiert, die entstandene wäßrige Mischung auf Temperaturen von 20°C bis 150°C erhitzt und das Pigment in überlicher Weise isoliert.

EP 0 173 927 A2

Croydon Printing Company Ltd.

Verfahren zur Herstellung organischer Pigmente mit hervorragenden anwendungstechnischen Eigenschaften

Die Erfindung betrifft ein Verfahren zur Herstellung organischer Pigmente mit hervorragenden anwendungstechnischen Eigenschaften durch Behandlung feinverteilter Rohpigmente (nachstehend als "Präpigmente" bezeichnet) mit sauren Polyphosphorsäureestern.

Voraussetzung für den technischen Einsatz von organischen Pigmenten ist ihre optimale Feinverteilung in den entsprechenden Anwendungsmedien, wie Lacken, plastischen Massen und Druckfarben. Aus diesem Grund sind bei der Herstellung organischer Pigmente besondere Maßnahmen nötig. Diese Maßnahmen werden unter den Begriffen Feinverteilung, Finish und Konditionierung zusammengefaßt. Je nach zugrundeliegendem Farbkörper kann man die Feinverteilung direkt bei der Synthese erreichen, wie es beispielsweise bei vielen Azopigmenten der Fall ist. Bei anderen Pigmentklassen, insbesondere solchen der polycyclischen Reihe, fallen die Produkte bei der Herstellung in grobkristalliner Form an, weshalb sich hieran Feinverteilungsprozesse, wie beispielsweise Roll- oder Schwingmahlung, Umfällung aus z.B. Schwefelsäure oder Verküpung und anschließende Reoxydation anschließen. Die durch Synthese in feinteiliger Form anfallenden oder durch vorstehend genannte Feinverteilungsmethoden erhaltenen Produkte, nachfolgend als "Präpigmente" bezeichnet, sind meist von schlechter Kristallqualität, stark agglomeriert und aus diesem Grund für einen direkten Einsatz zum Färben von Lacken, plastischen Massen und Druckfarben ungeeignet. Zum Erzielen optimaler Anwendbarkeit werden mehrere zusätzliche Behandlungsverfahren, wie z.B. Nachbehandlung mit Wasser, Lösungsmitteln, Säuren, Laugen, Zusatz von oberflächenaktiven Mitteln und/oder Temperaturbehandlung vorgeschlagen. Diese Verfahren werden im allgemeinen als Finish bezeichnet.

In der EP-OS 0075182 (US-PS 4 432 796) wird ein Verfahren beschrieben, bei dem die Herstellung des Präpigments aus dem Syntheseprodukt ("Rohpigment") durch Behandlung mit Polyphosphorsäure und anschließende Hydrolyse erfolgt, dem sich bekannte Finishvarianten anschließen können. Nach den Angaben der genannten EP-OS handelt es sich um ein Feinverteilungsprinzip (in der genannten EP-OS 00 75 182 als Konditionierung bezeichnet), das bei Benutzung von Schwefelsäure als Acidpasting bekannt ist.

In der US-PS 3265699 wird ein Verfahren beschrieben, bei dem die Abscheidung des Syntheseprodukts (Chinacridonpigments) in feinteiliger Form durch Solvolyse der Lösung des Pigments in Polyphosphorsäure mittels niedriger Alkohole erfolgt.

Beim Verfahren der genannten US-PS 3 265 699 bzw. EP-OS wird jeweils ein "Rohpigment" in Polyphosphorsäure gelöst oder suspendiert. (Gemäß der genannten US-PS liegt das Pigment (Chinacridon) in Salzform in Lösung vor; in der genannten EP-OS wird offengelassen, ob die Pigmente in Lösung oder Suspension vorliegen). Durch die Arbeitsweise der genannten US-PS und EP-OS wird in jedem Fall, gleichgültig ob das Pigment gelöst oder nur suspendiert wird, der vorher gegebene physikalische Zustand des Rohpigments, wie beispielsweise Verteilungszustand und gegebenenfalls Kristallmodifikation, völlig aufgehoben.

Demgegenüber erfolgt überraschenderweise bei der erfindungsgemäßen Behandlung der Präpigmente mit sauren Polyphosphorsäureestern keine Salzbildung und kein Lösen des Pigments, jedoch eine entscheidende Verbesserung der coloristischen Eigenschaften der nach dem Finish erhaltenen Pigmente, wie hohe Farbstärke, hohe Reinheit des Farbtons, gute Dispergierbarkeit, hervorragender Glanz und Rheologie in Lacken und Druckfarben, sowie gute Dispergierbarkeit, reiner Farbton und hohe Farbstärke in plastischen Massen.

Das erfindungsgemäße Verfahren zur Herstellung organischer Pigmente mit hervorragenden anwendungstechnischen Eigenschaften besteht darin, daß man feinverteilte Rohpigmente (organische Präpigmente) der Anthanthron-, Pyranthron-, Isoviolanthron-, Azo-, Chinacridon-, Flavanthron-, Indanthron-, Naphthaldazin-, Indigo-, Thioindigo-, Tetracarboximid-, Dioxazin-, Isoindolinon-, Perylen-, Anthrapyrimidin-, Acylanthrachinon-, Dianthra-chinonyl-, Azoanthrachinon-, Azomethinanthrachinon- und Phthalocyanin-Reihe mit sauren Estern aus Polyphosphorsäure und einem primären, sekundären oder tertiären Alkanol von 1 bis 8 Kohlenstoffatomen, einem Glykol, Glykolether oder Phenol bei Temperaturen von 0°C bis 100°C, vorzugsweise 20°C bis 50°C, behandelt, dann den angewandten Polyphosphorsäureester hydrolysiert, die entstandene wäßrige Mischung auf Temperaturen von 20°C bis 150°C, vorzugsweise 80°C bis 130°C erhitzt und das Pigment in üblicher Weise isoliert.

Der angewandte saure Polyphosphorsäureester wird hergestellt durch Umsetzung von Polyphosphorsäure eines $P_2O_5$-Gehalts von 82 bis 85 % mit einem primären, sekundären oder tertiären Alkanol von 1 bis 8 Kohlenstoffatomen, wie z.B. Methanol, Äthanol, Isopropanol, Isobutanol, Amylalkohol und tert. Butanol, einem Glykol, wie 1,2-Ethylenglykol, Propylenglykol, Trimethylen-glykol, 2,2-Dimethylpropan-1,3-diol, 1,3-Butylenglykol, 1,4-Butylenglykol oder 2,3-Butylenglykol, einem Glykolether, wie Ethylenglykolmonomethylether, Ethylenglykolmonoethyleter Ethylenglykolmono-n-butylether oder Diethylenglykol, oder einem Phenol, wie Phenol, 2-Methylphenol, 3-Methylphenol, 4-Methylphenol, 2-Chlorphenol, 2-Bromphenol oder 3-Nitrophenol.

Bei der zugrundeliegenden Polyphosphorsäure handelt es sich um Gemische von Sauerstoffsäuren des 5-wertigen Phosphors. Die Hauptkomponenten stellen

0173927

Kondensationspolymere der o-Phosphorsäure dar, insbesondere lineare Polymere, die der allgemeinen Formel

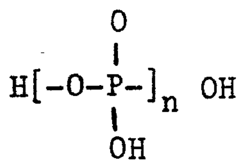

in welcher n eine Zahl $\geq$ 2 ist, entsprechen.

Die Umsetzung der Polyphosphorsäure mit der alkoholischen bzw. phenolischen Verbindung (im folgenden Hydroxylverbindung genannt) zum Ester kann im einzelnen so erfolgen, daß man die Polyphosphorsäure vorlegt und danach unter Kühlung die Hydroxylverbindung zugibt. Man kann aber auch umgekehrt verfahren, indem man die Hydroxylverbindung vorlegt und die Polyphosphorsäure unter Kühlung zugibt. Es ist in jedem Fall darauf zu achten, daß Temperaturführung und Zulaufgeschwindigkeit so aufeinander abgestimmt sind, daß keine Dehydratisierung der Hydroxylverbindung erfolgt. Das Mengenverhältnis Hydroxylverbindung: Polyphosphorsäure kann in weiten Grenzen schwanken. So kann die 0,5 bis 5-fache Gewichtsmenge, vorzugsweise 1- bis 3-fache Gewichtsmenge an Hydroxylverbindung, bezogen auf Polyphosphorsäure, angewandt werden. Je nach dem angewandten Gewichtsverhältnis Hydroxylverbindung zu Polyphosphorsäure kann man die Stabilität des sauren Polyphosphorsäureesters so einstellen, daß er während der Behandlung des Pigments thermisch stabil bleibt. Die Anwendung dieser Polyphosphorsäureester erfolgt in der 2- bis 8-fachen, vorzugsweise 3- bis 5-fachen Gewichtsmenge, bezogen auf das Präpigment.

Die Behandlung des Präpigments mit dem Polyphosphorsäureester wird vorzugsweise in zwei Stufen durchgeführt. In erster Stufe erfolgt ein Verrühren des Präpigments

bei 0 bis 100°C, wobei man an der Viskositätsänderung der Suspension die Einwirkung des Polyphosphorsäureesters auf das Präpigment beobachten kann. An diese erste Stufe des Finishprozesses schließt sich dann die Hydrolyse des Polyphosphorsäureesters und die darauffolgende Behandlung mit der Hydroxylverbindung-Wasser-Mischung bei Temperaturen von 20° bis 150°C an.

Die Hydrolyse der angewandten Polyphosphorsäureester erfolgt auf an sich bekannte Weise, indem man am Ende der Behandlung des Präpigments mit dem Polyphosphorsäureester eine für die Verseifung des Esters ausreichende Menge Wasser zugibt und auf eine Temperatur des angegebenen Bereichs erhitzt, wobei man die freiwerdende Hydroxylverbindung gleichzeitig oder auch nach beendeter Einwirkung durch Destillation entfernen kann.

Es ist auch möglich, nach der Hydrolyse durch Zusatz weiterer Lösungsmittel den Finish zu Ende zu führen.

Oberflächenaktive Mittel können sowohl bei der ersten als auch der zweiten Stufe zugesetzt werden. Durch Zugabe entsprechender Mengen alkalisch wirkender Verbindungen ist die Einwirkung des Lösungsmittels auch im alkalischen Bereich möglich. Je nach gewünschter Verwendung ist der Feinverteilungszustand des Präpigments und die Art der Behandlung mit dem sauren Polyphosphorsäureester aufeinander abzustimmen.

Die auf übliche Weise (Filtration, Trocknung) isolierten Pigmente zeichnen sich durch hohe Farbstärke, hohe Reinheit des Farbtons, gute Dispergierbarkeit, hervorragenden Glanz und Rheologie in Lacken und Druckfarben, sowie durch gute Dispergierbarkeit, reinen Farbton und hohe Farbstärke in plastischen Massen aus.

Beispiel 1

480 g Polyphosphorsäure (82 - 84 % $P_2O_5$) werden vorgelegt und auf 50°C erwärmt. Anschließend werden dazu bei dieser Temperatur 1440 g Isobutanol 85 %ig zugetropft. Nach dreistündigem Nachrühren bei 50°C werden 30 g eines oberflächenaktiven Mittels (Alkylphenol-polyglykoläthersulfat) zugegeben und dann bei 50°C 600 g Präpigment Violet 23, C.I. 51319, Mahlgut (20 % Salz aus der Synthese enthaltend) (hergestellt durch salzfreie Trockenmahlung nach DE-PS 2742575 (US-PS 4253839) eingetragen. Nach einstündigem Nachrühren bei 50°C werden 3600 ml Wasser zugegeben, das Isobutanol bis 100°C am Übergang abdestilliert, und das Pigment abgesaugt, neutral gewaschen und bei 80°C getrocknet.

Man erhält 473 g Pigment, das sich hervorragend zum Färben von Lacken und Druckfarben eignet und dem eingesetzten Präpigment coloristisch weit überlegen ist.

Beispiel 2

1440 g Isobutanol 85 %ig werden vorgelegt. Dazu werden bei 50°C 480 g Polyphosphorsäure (82 - 84 % $P_2O_5$) in Anteilen zugegeben. Nach 16 stündigem Nachrühren bei 25°C werden 30 g eines oberflächenaktiven Mittels (Alkylphenol-polyglykoläthersulfat) zugegeben und 600 g Präpigment Violet 23, C.I. 51319, Mahlgut (20 % Salz aus der Synthese enthaltend) (hergestellt durch salzfreie Trockenmahlung nach DE-PS 2742575) eingetragen. Nach einstündigem Nachrühren bei 50°C werden 3600 ml Wasser zugegeben. Dann wird 5 Stunden zum Sieden erhitzt, das Isobutanol bis 100°C am Übergang abdestilliert und das Pigment abgesaugt, neutral gewaschen und bei 80°C getrocknet.

Man erhält 460,5 g Pigment, das sich hervorragend zum Färben von Lacken und Druckfarben eignet und dem Präpigment coloristisch weit überlegen ist.

Beispiel 3

160 g Polyphosphorsäure (82 - 84 % $P_2O_5$) werden vorgelegt und auf 50°C erwärmt. Dazu werden bei dieser Temperatur 160 g Isobutanol 85 %ig zugetropft. Nach dreistündigem Nachrühren werden 10 g eines oberflächenaktiven Mittels (Alkylphenol-polyglykoläthersulfat) zugegeben und anschließend bei 50°C 100 g Präpigment Violet 23, C.I. 51319, Mahlgut (20 % Salz aus der Synthese enthaltend) (hergestellt durch salzfreie Trockenmahlung nach DE-PS 2742575) eingetragen. Nach dreistündigem Rühren bei 80°C werden 600 ml Wasser zugegeben, das Isobutanol bis 100°C am Übergang abdestilliert, und das Pigment abgesaugt, neutral gewaschen und getrocknet.

Man erhält 78,2 g Pigment, das sich hervorragend zum Färben von Lacken und Druckfarben eignet und dem Präpigment coloristisch weit überlegen ist.

Beispiel 4

160 g Polyphosphorsäure (82 - 84 % $P_2O_5$) werden vorgelegt und auf 50°C erwärmt. Anschließend werden bei dieser Temperatur 160 g Isobutanol (100 %ig) zugetropft. Nach dreistündigem Nachrühren werden 100 g Präpigment Violet 23 C.I. 51319, Mahlgut (20 % Salz aus der Synthese enthaltend) (hergestellt durch salzfreie Trockenmahlung nach DE-PS 2742575) eingetragen. Nach dreistündigem Rühren bei 80°C werden 600 ml Wasser zugegeben und das Isobutanol bis 100°C am Übergang abdestilliert. Dann wird bei 60°C eine Lösung von 10 g eines oberflächenaktiven Mittels (Alkylphenol-polyglykoläthersulfat) in 100 ml Wasser zugegeben, 1 Stunde bei 60°C nachgerührt und das Pigment abgesaugt, neutral gewaschen und bei 80°C getrocknet.

Man erhält 78,8 g Pimgent, das sich hervorragend zum Färben von Lacken eignet und dem Präpigment coloristisch weit überlegen ist.

Beispiel 5

Zu vorgelegten 1440 g Isobutanol 85 %ig werden bei 50°C 480 g Polyphosphorsäure (82 - 84 % $P_2O_5$) in Anteilen zugegeben. Nach 16-stündigem Nachrühren bei 25°C werden 600 g Präpigment Violet 23, C.I. 51319, Mahlgut (20 % Salz aus der Synthese enthaltend) (hergestellt durch salzfreie Trockenmahlung nach DE-PS 2742575) eingetragen. Nach einstündigem Nachrühren bei 50°C werden 3600 ml Wasser zugegeben. Dann wird 5 Stunden zum Sieden erhitzt und das Isobutanol bis 100°C am Übergang abdestilliert und das Pimgent abgesaugt, neutral gewaschen und bei 80°C getrocknet.

Man erhält 443,5 g Pigment, das sich hervorragend zum Färben von Lacken und plastischen Massen eignet und dem Präpigment coloristisch weit überlegen ist.

Beispiel 6

Zu vorgelegten 1440 g Isobutanol 85 %ig werden bei 50°C 480 g Polyphosphorsäure (82 - 84 %ig) in Anteilen zugegeben. Nach 16-stündigem Nachrühren bei 25°C werden 30 g eines oberflächenaktiven Mittels (Alkylphenol-polyglykoläthersulfat) zugegeben und dann 600 g Präpigment Violet 23, C.I. 51319, Mahlgut (20 % Salz aus der Synthese enthaltend) (hergestellt durch salzfreie Trockenmahlung nach DE-PS 2742575) eingetragen. Nach 24-stündigem Nachrühren bei 25°C werden 3600 ml Wasser zugegeben, dann das Isobutanol bis 100°C am Übergang abdestilliert und das Pimgent abgesaugt, neutral gewaschen und bei 80°C getrocknet.

Man erhält 456,7 g Pigment, das sich hervorragend zum Färben von Lacken und Druckfarben eignet und dem Präpigment coloristisch weit überlegen ist.

Beispiel 7

Zu vorgelegten 1440 g Isobutanol 85 %ig werden bei 50°C 480 g Polyphosphorsäure (82 - 84 % $P_2O_5$) in Anteilen zugegeben. Nach 16-stündigem Nachrühren bei 25°C werden 30 g eines oberflächenaktiven Mittels (Alkylphenol-polyglykoläthersulfat) zugegeben und dann 600 g Präpigment Violet 23, C.I. 51319, Mahlgut (20 % Salz aus der Synthese entstehend) (hergestellt durch salzfreie Trockenmahlung nach DE-PS 2742575) eingetragen. Nach einstündigem Nachrühren bei 50°C werden 3600 ml Wasser zugegeben. Anschließend wird im Autoklav 3 Stunden auf 125°C erhitzt. Darauf läßt man abkühlen und destilliert das Isobutanol bis 100°C am Übergang ab. Schließlich wird das Pigment abgesaugt, neutral gewaschen und bei 80°C getrocknet.

Man erhält 434,5 g Pigment, das sich hervorragend zum Färben von Lacken und Druckfarben eignet und dem Präpigment coloristisch weit überlegen ist.

Beispiel 8

480 g Polyphosphorsäuremethylester (82 - 84 % $P_2O_5$) werden vorgelegt und auf 50°C erhitzt. Bei dieser Temperatur läßt man 1440 g Methanol zutropfen. Nach 3-stündigem Nachrühren bei 50°C gibt man 30 g eines oberflächenaktiven Mittels (Alkylphenol-polyglykoläthersulfat) zu und dann bei 50°C 600 g Präpigment Violet 23, C.I. 51319, Mahlgut (20 % Salz aus der Synthese enthaltend) (hergestellt durch salzfreie Trockenmahlung nach DE-PS 2742575). Man rührt 1 Stunde bei 50°C nach und gibt dann 3600 ml Wasser zu. Nach 1-stündigem Nachrühren bei 50°C wird das Pigment abgesaugt, neutral gewaschen und bei 80°C getrocknet.

Man erhält 458,3 g Pigment, das sich hervorragend zum Färben von Lacken und Druckfarben eignet und dem Präpigment coloristisch weit überlegen ist.

Beispiel 9

160 g Polyphosphorsäure (82 - 84 % $P_2O_5$) werden auf 50°C geheizt. Dazu werden bei dieser Temperatur 160 g Ethylglykol zugetropft. Nach 3-stündigem Nachrühren bei 50°C werden 5 g eines oberflächenaktiven Mittels (Alkylphenolpolyglykoläthersulfat) zugegeben und anschließend 100 g Präpigment Violet 23, C.I. 51319, Mahlgut (20 % Salz aus der Synthese enthaltend) (hergestellt durch salzfreie Trockenmahlung nach DE-PS 2742575) eingetragen. Nach 3-stündigem Nachrühren bei 50°C werden 600 ml Wasser zugegeben und das Pigment abgesaugt, neutral gewaschen und bei 80°C getrocknet.

Man erhält 75,9 g Pigment, das sich hervorragend zum Färben von Lacken und Druckfarben eignet und dem Präpigment coloristisch weit überlegen ist.

Beispiel 10

40 g Polyphosphorsäure (82 - 84 % $P_2O_5$) werden vorgelegt und auf 50°C geheizt. Dazu läßt man bei dieser Temperatur 40 g Isobutanol 85 %ig zutropfen und rührt 3 Stunden bei 50°C nach. Anschließend gibt man 1,25 g eines oberflächenaktiven Mittels (Alkylphenol-polyglykoläthersulfat) zu und trägt dann 20 g Präpigment Red 171 C.I. 12512 (hergestellt durch Kuppeln von diazotiertem 5-Nitro-2-amino-anisol mit mit N-5-(2'-Hydroxy-3'-naphthoylamino-) benzimidazolon-(2)) ein. Nach 3-stündigem Nachrühren bei 50°C gibt man 150 ml Wasser zu, destilliert das Isobutanol bis 100°C am Übergang ab, saugt das Pigment ab, wäscht es neutral und trocknet es bei 80°C.

Man erhält 19,6 g Pigment, das sich hervorragend zum Färben von Lacken und plastischen Massen eignet und dem Präpigment coloristisch weit überlegen ist.

Beispiel 11

40 g Polyphosphorsäure (82 - 84 % $P_2O_5$) werden vorgelegt und auf 50°C erwärmt. Dann läßt man bei dieser Temperatur 40 g Isobutanol 85 %ig zutropfen und rührt 3 Stunden bei 50°C nach. Nach Zusatz von 1,25 g eines oberflächenaktiven Mittels (Alkylphenol-polyglykoläthersulfat) trägt man 20 g Präpigment Red 170, C.I. 12475 (hergestellt durch Kuppeln von diazotiertem 4-Aminobenzamid mit N-2-(2'-Hydroxy-3'-naphthoylamino)-phenetol ein und rührt 3 Stunden bei 50°C nach. Anschließend gibt man 150 ml Wasser zu destilliert das Isobutanol bis 100°C am Übergang ab saugt das Pigment ab, wäscht es neutral und trocknet es bei 80°C.

Man erhält 19,3 g Pigment, das sich hervorragend zum Färben von Lacken und Druckfarben eignet und dem Präpigment coloristisch weit überlegen ist.

Beispiel 12

20 g Polyphosphorsäure (82 - 84 % $P_2O_5$) weden vorgelegt und auf 50°C erwärmt. Dazu läßt man bei dieser Temperatur 60 g Isobutanol 85 %ig zutropfen und rührt 3 Stunden bei 50°C nach. Dann gibt man 1,25 g eines oberflächenaktiven Mittels (Alkylphenol-polyglykoläthersulfat) zu und trägt anschließend 20 g Präpigment Blue 60,C.I. 69800 (hergestellt durch Umfällen aus konz. Schwefelsäure ohne Nachbehandlung nach DE-OS 2540739 (U.K.-PS 14 63 141) ein. Nach einstündigem Nachrühren gibt man bei 50°C 150 ml Wasser zu und destilliert das Isobutanol bis 100°C am Übergang ab. Dann wird das Pigment neutral gewaschen und bei 80°C getrocknet.

Man erhält 19,2 g Pigment, das sich hervorragend zum Färben von Lacken und Druckfarben eignet und dem Präpigment coloristisch weit überlegen ist.

Beispiel 13

20 g Polyphosphorsäure (82 - 84 % $P_2O_5$) werden vorgelegt und auf 50°C erwärmt. Dann läßt man bei dieser Temperatur 60 g Isobutanol 85 %ig zutropfen und rührt 3 Stunden bei 50°C nach. Dann gibt man 1,25 g eines oberflächenaktiven Mittels (Alkylphenol-polyglykoläthersulfat) zu und trägt anschließend 20 g Präpigment Yellow 24, C.I. 70600 (hergestellt nach DE-OS 2540739 durch Umfällen aus konz. Schwefelsäure ohne Nachbehandlung) ein. Nach einstündigem Nachrühren bei 50°C gibt man 150 ml Wasser zu und destilliert das Isobutanol bis 100°C am Übergang ab. Dann wird das Pigment abgesaugt, neutral gewaschen und bei 80°C getrocknet.

Man erhält 19,7 g Pigment, das sich hervorragend zum Färben von Lacken und Druckfarben eignet und dem Präpigment coloristisch weit überlegen ist.

Beispiel 14

40 g Polyphosphorsäure (82 - 84 % $P_2O_5$) werden vorgelegt und auf 50°C erwärmt. Dann läßt man bei dieser Temperatur 40 g Isobutanol 85 %ig zutropfen und rührt 3 Stunden bei 50°C nach. Darauf gibt man 1,25 g eines oberflächenaktiven Mittels (Alkylphenol-polyglykoläthersulfat) zu und trägt anschließend 20 g Präpigment Red 168 C.I. 59300 (hergestellt durch Umfällen aus konz. Schwefelsäure ohne Nachbehandlung nach DE-OS 2540739) ein, rührt 1 Stunde bei 50°C nach und gibt 150 ml Wasser zu. Anschließend wird das Isobutanol bis 100°C am Übergang abdestilliert und das Pigment abgesaugt, neutral gewaschen und bei 80°C getrocknet.

Man erhält 19,9 g Pigment, das sich hervorragend zum Färben von Lacken und Druckfarben eignet und dem Präpigment coloristisch weit überlegen ist.

Beispiel 15

80 g Polyphosphorsäure (82 - 84 % $P_2O_5$) werden vorgelegt und auf 50°C erwärmt. Bei dieser Temperatur läßt man 240 g Isobutanol 85 %ig zutropfen und rührt 3 Stunden bei 50°C nach. Anschließend gibt man zunächst 5 g eines oberflächenaktiven Mittels (Alkylphenol-polyglykolähersulfat) zu und trägt dann 80 g Präpigment Red 122, C.I. 73915 (hergestellt nach DE-PS 1199906 (U.K.-PS 997 476) durch Ringschluß von 2,5-Di-(4'-methylanilino)-terpethalsäure-Na-salz in Polyphosphorsäure), ein und rührt 1 Stunde bei 50°C nach. Nach Zusatz von 600 ml Wasser destilliert man das Isobutanol bis 100°C am Übergang ab. Dann wird das Pigment abgesaugt, neutral gewaschen und bei 80°C getrocknet.

Man erhält 79,5 g Pigment, das sich hervorragend zum Färben von Lacken und Druckfarben eignet und dem Präpigment coloristisch weit überlegen ist.

Beispiel 16

40 g Polyphosphorsäure (82 - 84 % $P_2O_5$) werden vorgelegt und auf 50°C erwärmt. Bei dieser Temperatur läßt man dann 40 g Isobutanol 85 %ig zutropfen und rührt 3 Stunden bei 50°C nach. Dann gibt man 1,25 g eines oberflächenaktiven Mittels (Alkylphenol-polyglykoläthersulfat) zu und trägt anschließend 20 g Präpigment Violet 19, C.I. 46500 (hergestellt nach DE-PS 1199906 durch Ringschluß von 2,5-Dianilinotherepththalsäure-Na-salz in Polyphosphorsäure) ein und rührt 3 Stunden bei 50°C nach. Nach Zugabe von 150 ml Wasser wird das Isobutanol bis 100°C am Übergang abdestilliert und das Pigment abgesaugt, neutral gewaschen und bei 80°C getrocknet.

Man erhält 19,7 g Pigment, das sich hervorragend zum Färben von Lacken und Druckfarben eignet und dem Präpigment coloristisch weit überlegen ist.

Beispiel 17

40 g Polyphosphorsäure (82 - 84 % $P_2O_5$) werden vorgelegt und auf 50°C erwärmt. Bei dieser Temperatur läßt man dann 40 g Isobutanol 85 %ig zutropfen und rührt 3 Stunden bei 50°C nach. Dann trägt man 25 g Präpigment Violet 29, C.I. 71129, Mahlgut (hergestellt durch Trockenmahlung nach DE-OS 3018006 (US-PS 4431806)) ein und rührt 3 Stunden bei 50°C nach. Nach Zugabe von 150 ml Wasser wird das Isobutanol bis 100°C am Übergang abdestilliert und das Pigment abgesaugt, neutral gewaschen und bei 80°C getrocknet.

Man erhält 23,1 g Pigment, das sich hervorragend zum Färben von Lacken und plastischen Massen eignet und dem Präpigment coloristisch weit überlegen ist.

Beispiel 18

40 g Polyphosphorsäure (82 - 84 % $P_2O_5$) werden vorgelegt und auf 50°C erwärmt. Bei dieser Temperatur läßt man 40 g Isobutanol 85 %ig zutropfen und rührt 3 Stunden bei 50°C nach. Dann trägt man 20 g Präpigment Red 179, C.I. 71130 (hergestellt durch wäßrige Kondensation nach DE-AS 2504481 (US-PS 4153602)) ein und rührt 3 Stunden bei 50°C nach. Dann gibt man 150 ml Wasser zu und destilliert das Isobutanol bis 100°C am Übergang ab. Anschließend wird das Pigment abgesaugt, neutral gewaschen und bei 80°C getrocknet.

Man erhält 19,7 g Pigment, das sich hervorragend zum Färben von Lacken, insbesondere Metallic-Lacken eignet und dem Präpigment coloristisch weit überlegen ist.

Beispiel 19

20 g Polyphosphorsäure (82 - 84 % $P_2O_5$) werden vogelegt und auf 50°C erwärmt. Bei dieser Temperatur läßt man 60 g

Isobutanol 85 %ig zutropfen und rührt 3 Stunden bei 50°C nach. Anschließend trägt man 20 g Präpigment Blue 15, C.I. 74160 ß-Phase (hergestellt durch Salzvermahlung nach DE-PS 950799), ein und rührt 1 Stunde bei 50°C nach. Nach Zugabe von 150 ml Wasser destilliert man das Isobutanol bis 100°C Übergang ab. Dann wird das Pigment abgesaugt, neutral gewaschen und bei 80°C getrocknet.

Man erhält 19,4 g Pigment, das sich hervorragend zum Färben von Lacken und plastischen Massen eignet und dem Präpigment coloristisch weit überlegen ist.

Patentansprüche:

1. Verfahren zur Herstellung organischer Pigmente mit hervorragenden anwendungstechnischen Eigenschaften, dadurch gekennzeichnet, daß man feinverteilte Rohpigmente der Anthanthron-, Pyranthron-, Isoviolanthron-, Azo-, Chinacridon-, Flavanthron-, Indanthron-, Naphthaldazin-, Indigo-, Thioindigo-, Tetracarboximid-, Dioxazin-, Isoindolinon-, Perylen-, Anthrapyrimidin-, Acylanthrachinon-, Dianthrachinonyl-, Azoanthrachinon-, Azomethinanthrachinon- und Phthalocyanin-Reihe mit sauren Estern aus Polyphosphorsäure und einem primären, sekundären oder tertiären Alkanol von 1 bis 8 Kohlenstoffatomen, einem Glykol, Glykolether oder Phenol bei Temperaturen von 0°C bis 100°C, behandelt, anschließend den angewandten Polyphosphorsäureester hydrolysiert, die entstandene wäßrige Mischung auf Temperaturen von 20°C bis 150°C erhitzt und das Pigment in üblicher Weise isoliert.

2. Verfahren nach Anspruch 1, dadurch gekennzeichnet, daß man mit einem Ester aus Polyphosphorsäure mit einem $P_2O_5$-Gehalt von 82 - 85 Gew.-% und Methanol, n- oder i-Butanol oder Ethylglykol behandelt.

3. Verfahren nach Anspruch 1, dadurch gekennzeichnet, daß man mit einem Polyphosphorsäureester behandelt, bei welchem das Gewichtsmengenverhältnis Hydroxylverbindung: Polyphosphorsäure 0,5 bis 5 : 1 beträgt.

4. Verfahren nach Anspruch 1, dadurch gekennzeichnet, daß man das feinverteilte Rohpigment mit der 2- bis 8-fachen Gewichtsmenge an saurem Polyphosphorsäureester behandelt.